# EUROPÄISCHE PATENTSCHRIFT

(11) **EP 3 269 651 B1**
(45) Veröffentlichungstag und Bekanntmachung des Hinweises auf die Patenterteilung: **03.07.2019**
(21) Anmeldenummer: 17173277.9
(22) Anmeldetag: 29.05.2017
(51) Int. Cl.: B64G 1/40, F03G 7/06, F16K 31/02

(54) **VENTIL ZUM SELEKTIVEN ÖFFNEN EINER FLUIDLEITUNG IN EINEM SATELLITENANTRIEBSSYSTEM**
VALVE FOR SELECTIVELY OPENING A FLUID CONDUIT IN A SATELLITE DRIVE SYSTEM
SOUPAPE D'OUVERTURE SÉLECTIVE D'UNE CONDUITE DE FLUIDE DANS UN SYSTÈME DE PROPULSION DÉDIÉ AUX SATELLITES

(30) Priorität: 11.07.2016 DE 102016212581
(43) Veröffentlichungstag der Anmeldung: 17.01.2018
(73) Patentinhaber: ArianeGroup GmbH, 82024 Taufkirchen (DE)
(72) Erfinder: Kraus, Stephan, 74229 Oedheim (DE); Maier, Thomas, 74348 Lauffen (DE); Wolf, Markus, 70173 Stuttgart (DE); Schulte, Georg, 74239 Kochersteinsfeld (DE)
(74) Vertreter: Schicker, Silvia

(56) Entgegenhaltungen:
- EP-A1- 1 548 342
- WO-A1-2016/035067
- US-A1- 2013 167 377

## Beschreibung

Die Erfindung betrifft ein Ventil zum selektiven Öffnung einer Fluidleitung, insbesondere in einem Satellitenantriebssystem, sowie ein Satellitenantriebssystem, umfassend ein derartiges Ventil.

Bei Satelliten ist es bekannt, Ventile vorzusehen, die selektiv öffenbar sind und insbesondere lediglich ein einziges Mal geöffnet werden können. Hierdurch soll beispielsweise ein gezieltes Ablassen von Resttreibstoff vor einem Atmosphärenwiedereintritt ermöglicht werden, um unerwünschte Explosionen zu vermeiden (sogenanntes Passivieren des Satellitenantriebssystem und insbesondere von dessen Treibstofftanks oder -leitungen). Des Weiteren ist im Rahmen der Eliminierung sämtlicher an Bord befindlicher Energie das Entleeren von Hochdruck-Fördergastanks (z.B. Heliumtanks) am Ende der Betriebszeit des Raumfahrtsystems erforderlich.

Aus der DE 10 2013 001 992 A1 ist hierzu eine Lösung bekannt, bei der ein Ventil ein Material umfasst, das zur irreversiblen einmaligen Öffnung eines Ventils bis zu einer Phasenumwandlungstemperatur erwärmbar ist. Ferner sind auch pyrotechnische Anwendungen bekannt, die jedoch eine lediglich begrenzte Lebensdauer besitzen und deren Aktivierung nur mit einer gewissen Schockwirkung möglich ist. Pyrotechnische Ventile zeichnen sich ferner durch hohe Herstellkosten aus und erfordern hohe Sorgfalt bei der Handhabung und dem Transport. In der Regel darf auch nur geschultes Personal mit besonderen Sprengstoffscheinen derartige Ventile handhaben.

Bei dem in der US 2013/0167377 A1 gezeigten Ventil wird ein Auslassbereich durch ein Verschlusselement mit Sollbruchstelle verschlossen, welches mittels eines Aktorelements in eine geöffnete Stellung gebracht werden kann. Das Aktorelement ist aus einem Formgedächtnismaterial gebildet. Bei axialer Ausdehnung des Aktorelements wirkt dieses so auf das Verschlusselement, dass das Verschlusselement an der Sollbruchstelle bricht.

Nachteilig bei den vorbekannten Lösungen sind deren komplexer Aufbau sowie eine allgemein erhöhte Baugröße. Ferner sind zum Erzielen einer ausreichenden Dichtigkeit des Ventils umfangreiche Maßnahmen erforderlich. Es hat sich gezeigt, dass derartige Ventile deshalb auch nicht für Hochdruckanwendungen geeignet sind und allgemein nur unter erhöhten Kosten hergestellt werden können.

Die Erfindung stellt sich daher die Aufgabe, ein Ventil zum selektiven und insbesondere einmaligen Öffnen einer Fluidleitung bereitzustellen, dass bei einem vereinfachten Aufbau einer zuverlässige Dichtigkeit besitzt.

Diese Aufgabe wird durch ein Ventil gemäß Anspruch 1 sowie ein Satellitenantriebssystem gemäß Anspruch 14 gelöst. Diese Lösung kann sich ferner durch eine nahezu unbegrenzte Lebensdauer und geringe Herstellkosten auszeichnen und eine hohe interne (Helium-) Dichtigkeit sowie aufgrund nachstehend erläuterter Schweißnähte auch ein besonders dichtes Gehäuse bereitstellen (externe Dichtigkeit). Außerdem vermeidet sie die erläuterten Nachteile von pyrotechnischen Ventilen.

Ein Ventil zum selektiven Öffnen einer Fluidleitung, insbesondere in einem Satellitenantriebssystem, umfasst ein Einlasselement, einen Auslassbereich sowie ein Verschlusselement, das in einer Ausgangsposition eine fluidische Verbindung zwischen dem Einlasselement und dem Auslassbereich blockiert.

Das Einlasselement kann sich entlang einer Längsachse erstrecken sowie allgemein langgestreckt ausgebildet sein. Dies kann ein Ausbilden mit einer ausgeprägten Länge entlang der Längsachse des Einlasselements im Vergleich zu dessen Querschnittsabmessungen einschließen. Das Einlasselement kann ferner einen Einlassfluidpfad definieren, der sich ebenfalls entlang der Längsachse erstrecken kann. Schließlich kann das Einlasselement zumindest abschnittsweise hohl oder hohlzylindrisch ausgebildet sein und der Einlassfluidpfad kann sich durch den hohlen Abschnitt des Einlasselements hindurch erstrecken.

Der Auslassbereich kann ebenfalls durch ein langgestrecktes und zumindest abschnittsweise hohles Auslasselement gebildet werden oder ein solches umfassen. Gemäß einer bevorzugten Variante definiert der Auslassbereich einen Auslassfluidpfad, der sich wiederum durch einen hohlen Abschnitt eines Auslasselementes hindurch erstrecken kann. Vorzugsweise verläuft der Auslassfluidpfad dabei im Wesentlichen parallel oder koaxial zu dem Einlassfluidpfad.

Bei dem Verschlusselement kann es sich um jegliches geeignetes Element handeln, das (zumindest in einer Ausgangsposition) einen Fluiddurchfluss durch das Einlasselement in Richtung des Auslassbereiches und somit eine fluidleitende Verbindung hierzwischen blockieren kann. Beispielsweise kann das Verschlusselement im Wesentlichen scheibenförmig ausgebildet sein und einen Durchmesser aufweisen, der die Querschnittsabmessungen beziehungsweise den Durchmesser eines axialen Endbereiches des Einlass- und/oder des Auslasselements überschreitet.

Das Ventil umfasst ferner ein Aktorelement, das dazu ausgebildet, sich an dem Verschlusselement abzustützen, wobei das Aktorelement ein zumindest von dem Einlasselement abweichendes Wärmeausdehnungsverhalten aufweist. Das Wärmeausdehnungsverhalten kann zudem von dem Wärmeausdehnungsverhalten des Verschlusselementes und/oder des Auslassbereiches abweichen sowie von jeglichen weiteren Komponenten des Ventils und vorzugsweise deren Wärmeausdehnungsverhalten überschreiten. Insbesondere kann hierbei vorgesehen sein, dass sich das Aktorelement bei einer Erwärmung in einem größeren Maße ausdehnt als das Einlasselement und/oder das Verschlusselement.

Hierdurch kann das Ausmaß des Abstützens an dem Verschlusselement sowie der dadurch übertragenen Kräfte mit zunehmender Erwärmung erhöht werden, insbesondere wenn das Verschlusselement eine Ausdehnung des Aktorelements behindert. Mit anderen Worten kann vorgesehen sein, dass das Aktorelement dazu ausgebildet ist, nach Maßgabe eines Erwärmungsgrades Druckkräfte auf das Verschlusselement auszuüben.

Das Abstützen des Aktorelements kann mittelbar, beispielsweise über zwischengeordnete Elemente erfolgen, oder aber unmittelbar, beispielsweise durch eine direkte Anlage an dem Verschlusselement. Man beachte, dass das Aktorelement insbesondere bei einem niedrigen Erwärmungsgrad bzw. einer niedrigen Temperatur sich zunächst auch nicht an dem Verschlusselement abstützen und/oder direkt daran anliegen kann. Vielmehr kann dies erst ab Erreichen eines gewissen Erwärmungsgrades bzw. einer gewissen Temperatur erfolgen und zum Beispiel spätestens bei Erreichen eines nachfolgend erläuterten vorbestimmten Erwärmungsgrades. Mit anderen Worten kann zunächst ein Spalt zwischen dem Aktorelement und dem Verschlusselement vorgesehen sein, der insbesondere ein unterschiedliches Wärmeausdehnungsverhalten dieser Elemente kompensieren kann, solange der vorbestimmte Erwärmungsgrad noch nicht erreicht ist.

Ferner ist vorgesehen, dass sich das Aktorelement entlang einer Längsachse des Einlasselements erstreckt. Hierzu kann das Aktorelement im Wesentlichen korrespondierend zu dem Einlasselement ausgebildet und/oder innerhalb des Ventils angeordnet sein, sodass sich diese Elemente im Wesentlichen parallel zueinander innerhalb des Ventils erstrecken können. Beispielsweise kann sich auch das Aktorelement entlang einer Längsachse erstrecken und allgemein langgestreckt ausgebildet sein, wobei die Längsachsen des Aktorelements und des Einlasselements parallel zueinander verlaufen oder auch zusammenfallen können.

Schließlich ist das Aktorelement dazu ausgebildet, sich ab Erreichen eines vorbestimmten Erwärmungsgrades mit einer derartigen Kraft an dem Verschlusselement abstützten, dass das Verschlusselement aus seiner Ausgangsposition bewegt wird und eine fluidische Verbindung zwischen dem Einlasselement und dem Auslassbereich ermöglicht.

Unter dem vorbestimmten Erwärmungsgrad kann insbesondere eine Temperaturerhöhung des Aktorelements auf einen vorbestimmten Temperaturschwellenwert verstanden werden. Ebenso kann dies ein Halten des Aktorelements auf oder oberhalb des entsprechenden Temperaturschwellenwerts für eine gewisse Mindestzeitdauer einschließen. Die Abstützkraft des Aktorelements kann dabei eine Gewichtskraft des Verschlusselementes übersteigen und/oder eine Befestigungs- oder Vorspannungskraft, die das Verschlusselement zunächst in seiner Ausgangsposition hält. Insbesondere kann das Aktorelement dazu ausgebildet sein, das Verschlusselement im Wesentlichen entlang einer Längsachse des Einlasselements und/oder in Richtung des Ausgangsbereiches zu bewegen. Zusätzlich oder alternativ kann vorgesehen sein, dass die Bewegung entlang des Einlass- und/oder des Auslassfluidpfades erfolgt. Ferner kann das Verschlusselement in seiner aus der Ausgangsposition bewegten Endposition allgemein zwischen dem Einlasselement und dem Auslassbereich angeordnet und dabei von dem zu leitenden Fluid umströmbar sein.

Die Erfinder haben somit erkannt, dass durch Bereitstellen eines derartigen Ventils eine zuverlässige Betätigung und vereinfachte Abdichtung bei einem kompakten Aufbau ermöglicht wird. Insbesondere können sich die relevanten Elemente im Wesentlichen parallel zueinander beziehungsweise entlang gemeinsamer Längsachsen erstrecken und auch eine Betätigungsbewegung kann entlang dieser Längsachse erfolgen. Insgesamt kann das Ventil somit allgemein länglich ausgebildet werden und dabei gegenüber vorbekannten Lösungen reduzierte Querschnittsabmessungen aufweisen. Insbesondere können die sich zu einem Fluidpfad durch das Ventil quer erstreckenden Ventilabmessungen dabei erheblich reduziert werden.

Eine Weiterbildung sieht vor, dass das Einlasselement rohrförmig ausgebildet ist. Die Querschnittsabmessungen und/oder -form können dabei beliebig gewählt werden. Vorzugsweise ist jedoch ein runder und insbesondere kreisförmiger Querschnitt vorgesehen. Ferner kann die Länge des Einlasselements dessen Querschnittsabmessungen allgemein überschreiten und zum Beispiel eine größere Länge als dessen Durchmesser aufweisen. Das rohrförmige Einlasselement kann dabei mit angrenzenden Fluidleitungen koppelbar sein und sich ferner in eine etwaige Gehäuseanordnung des Ventils hinein erstrecken. Auch ein etwaiges Auslasselement des Auslassbereiches kann rohrförmig ausgebildet sein, nahe einer Ventilgehäuseanordnung jedoch auch einen aufgeweiteten Bereich umfassen, um eine zuverlässige Verbindung mit dem Gehäuse zu ermöglichen.

Das Aktorelement kann einen hohlzylindrischen Abschnitt umfassen, der das Einlasselement zumindest abschnittsweise umgibt. Hierbei kann ein zumindest abschnittsweises Umgeben entlang der Längsachse des Einlasselementes vorgesehen sein und/oder entlang einer Umfangsachse. Bevorzugt erstreckt sich das Aktorelement jedoch zumindest entlang eines gewissen Abschnittes der Längsachse des Einlasselementes und nimmt dieses dabei in dem hohlzylindrischen Abschnitt auf. Dabei kann zumindest der hohlzylindrische Abschnitt des Aktorelements allgemein korrespondierend zu dem Einlasselement ausgebildet sein, beispielsweise mit einer korrespondierenden Querschnittsform. Ferner kann der hohlzylindrische Abschnitt an einer Außenumfangsfläche des Einlasselements anliegen und/oder zumindest abschnittsweise in einem Abstand hiervon angeordnet sein, sodass ein Zwischenraum zwischen einer Innenumfangsfläche des Aktorelements und einer Außenumfangsfläche des Einlasselements vorliegt. Übergeordnet kann der hohlzylindrische Abschnitt somit rohr- oder hülsenförmig ausgebildet sein, vorzugsweise mit einem runden und/oder kreisförmigen Querschnitt, und das Aktorelement kann sozusagen auf das Einlasselement aufgeschoben werden.

Gemäß einem weiteren Aspekt ist das Aktorelement spätestens ab Erreichen des vorbestimmten Erwämungsgrades zumindest abschnittsweise relativ zu dem Einlasselement verschieblich und insbesondere entlang der Längsachse des Einlasselements verschieblich. Die Relatiwerschieblichkeit kann insbesondere auf eine zunehmende Wärmeausdehnung des Aktorelements relativ zu dem gleichbleibenden oder sich nur geringfügig ausdehnenden Einlasselement zurückgehen. Insbesondere kann vorgesehen sein, dass das Einlasselement allgemein feststehend innerhalb des Ventils ausgebildet ist und das Aktorelement sich nach Maßgabe des Erwärmungsgrades relativ zu diesem verschiebt. Hierbei kann sich das Aktorelement allgemein verlängern, sodass insbesondere ein dem Auslassbereich zugewandtes axiales Ende des Aktorelements sich relativ zu und/oder entlang des Einlasselementes verschieben kann.

Ferner kann vorgesehen sein, dass das Aktorelement spätestens ab Erreichen des vorbestimmten Erwärmungsgrades wenigstens eine Abmessung aufweist, die gegenüber einem Zustand des Aktorelements unterhalb des vorbestimmten Erwärmungsgrades vergrößert ist. Beispielsweise kann sich das Aktorelement in Abhängigkeit des Erwärmungsgrades verlängern und/oder seine Querschnittsabmessungen ändern. Dies kann sich insbesondere auf ein Verlängern entlang einer Längsachse des Aktorelements und/oder des Einlasselementes beziehen.

Gemäß einer bevorzugten Variante umfasst das Aktorelement ein Formgedächtnismaterial. Derartige Materialien sind im Stand der Technik bekannt, zum Beispiel in Form von sogenannten Formgedächtnislegierungen (insbesondere Nickel-Titan-Legierungen). Das Formgedächtnismaterial kann ferner wärme- beziehungsweise temperaturaktivierbar sein. Mit anderen Worten kann das Formgedächtnismaterial nach Maßgabe eines Erwärmungsgrades des Aktorelements zu einer ursprünglichen Ausgangsform zurückkehren, die sich vorzugsweise in der vorstehend geschilderten Weise durch vergrößerte Abmessungen und/oder vergrößerte Abstützkräfte an dem Kopplungselement auszeichnet.

In diesem Zusammenhang kann das Formgedächtnismaterial pseudoplastisch deformiert sein und spätestens ab Erreichen des vorbestimmten Erwärmungsgrades beginnen, zu seiner ursprünglichen Form zurückzukehren. Dabei kann die pseudoplastische Deformation ein Komprimieren das Aktorelements umfassen und findet vorzugsweise unter Ausüben von Druckkräften auf das Aktorelement statt.

Somit kann das Aktorelement zunächst in einem (pseudoplastisch) deformierten Zustand in dem Ventil angeordnet werden, wobei das Aktorelement in diesem Zustand ferner reduzierte Abmessungen aufweisen kann (beispielsweise eine durch Kompression/Druckkräfte verringerte Länge). Hierbei kann das Werkstoffgefüge des Formgedächtnismaterials in bekannter Weise entzwillingt werden, um den Formgedächtniseffekt bereitzustellen. Die pseudoplastische Deformation kann bei ausbleibender oder nur geringer Erwärmung ferner zunächst bestehen bleiben. Nach Maßgabe eines Erwärmungsgrades des Aktorelements und insbesondere ab Erreichen einer Aktivierungstemperatur oder eines Aktivierungserwärmungsgrades kann anschließend die pseudoplastische Verformung rückgängig gemacht werden, sodass das Aktorelement zu seiner ursprünglichen Form zurückkehrt. Wie geschildert, kann dies insbesondere ein Zurückkehren in einen nicht-komprimierten Zustand umfassen, also beispielsweise eine entsprechende Vergrößerung und/oder Verlängerung des Aktorelements. Dies kann insgesamt in der vorstehend geschilderten größeren Wärmeausdehnung des Aktorelements verglichen mit dem Einlasselement resultieren und zu vergrößerten Abstützkräften an dem Verschlusselement führen.

Das Verschlusselement kann in seiner Ausgangsposition an einem axialen Ende des Einlasselements angeordnet sein. Das axiale Ende kann ferner dem Auslassbereich zugewandt und/oder innerhalb einer etwaigen Gehäuseanordnung des Ventils angeordnet sein. Zum fluidischen Blockieren des Einlasselementes kann das Verschlusselement allgemein an dem axialen Ende Anliegen und/oder daran befestigt oder hiergegen vorgespannt sein, sowie größere Abmessungen als eine fluidleitende Öffnung des Einlasselementes aufweisen (beispielsweise größer als ein entsprechender Rohrdurchmessers des Einlasselementes).

Ferner kann vorgesehen sein, dass das Verschlusselement in seiner Ausgangsposition stoffschlüssig mit dem Einlasselement verbunden ist. Auch in diesem Fall kann ein Anordnen an und insbesondere stoffschlüssiges Verbinden unmittelbar mit einem vorzugsweise dem Auslassbereich zugewandten axialen Ende des Einlasselements vorgesehen sein. Der Stoffschluss kann durch Schweißen, Kleben, Löten, einstückiges Ausbilden oder dergleichen bereitgestellt werden, wobei der Stoffschluss allgemein von einem Verbindungsabschnitt zwischen dem Einlasselement und dem Verschlusselement umfasst sein kann.

In diesem Zusammenhang kann ferner vorgesehen sein, dass ein Verbindungsabschnitt zwischen dem Einlasselement und dem Verschlusselement einen mechanisch geschwächten Bereich umfasst, der eine Sollbruchstelle bildet. Unter einer mechanischen Schwächung kann insbesondere eine reduzierte Kraftübertragungsfähigkeit verstanden werden, beziehungsweise eine gegenüber benachbarten Bereichen des Einlasselements oder des Verbindungsabschnittes reduzierte Bruchgrenze. Dies kann allgemein durch ein Variieren der Materialeigenschaften im Bereich der Sollbruchstelle erfolgen, beispielsweise durch eine Wahl unterschiedlicher Materialien innerhalb des Einlasselements. Ebenso kann die Steifigkeit im Bereich der Sollbruchstelle reduziert werden, beispielsweise durch Variationen der Querschnittsabmessungen. Gemäß einer bevorzugten Variante umfasst die Sollbruchstelle eine Einkerbung in Form eines lokal reduzierten Querschnitts und insbesondere eines lokal reduzierten Durchmessers bei zylindrischer (und/oder rohrförmiger) Ausbildung des Einlasselements. Das Verschlusselement kann demnach als ein abtrennbarer Kerbrohrkopf ausgebildet sein. Demnach kann vorgesehen sein, dass das Aktorelement dazu ausgebildet ist, sich bei Erreichen des vorbestimmten Erwärmungsgrades mit einer derartigen Kraft an dem Verschlusselement abzustützen, dass die Sollbruchstelle bricht und somit ein Bewegen des Verschlusselementes aus seiner Ausgangsposition ermöglicht wird.

Das Verschlusselement kann wenigstens einen Krafteinleitungsbereich umfassen, an dem sich das Aktorelement spätestens ab Erreichen des vorbestimmten Erwärmungsgrades abstützen kann. Der Krafteinleitungsbereich kann beispielsweise einen Abschnitt des Verschlusselementes mit vergrößerten Querschnitts- und insbesondere Durchmesserabmessungen umfassen, die bevorzugt über einen Durchmesser des Einlasselementes hervorstehen. Ferner kann der Krafteinleitungsbereich einem axialen Ende beziehungsweise einer axialen Stirnfläche des Aktorelements gegenüberliegen (insbesondere entlang der Längsachse betrachtet), sodass das Aktorelement sich bei einer Erwärmung in Richtung des Krafteinleitungsbereiches ausdehnen und/oder mit zunehmenden Absturzkräften daran anliegen kann.

Das Ventil umfasst ferner eine Vorspannungseinrichtung, die sich an dem Verschlusselement abstützt und die dazu ausgebildet ist, das Verschlusselement spätestens ab Erreichen des vorbestimmten Erwärmungsgrades aus dessen Ausgangsposition zu drängen. Bei der Vorspannungseinrichtung kann es sich um ein elastisches Element und insbesondere eine Feder handeln. Diese kann unter einer geeigneten Vorspannung in dem Ventil aufgenommen sein und sich insbesondere mittels einer Drucckraft an dem Verschlusselement abstützen. Die Vorspannungseinrichtung erstreckt sich ebenfalls entlang einer Längsachse des Einlasselementes. Zusätzlich ist sie dabei in einem Zwischenraum zwischen dem Aktorelement und dem Einlasselement angeordnet und stützt sich ebenfalls an einem etwaigen Krafteinleitungsbereich des Verschlusselementes ab. Schließlich kann die Vorspannungseinrichtung allgemein als Spiralfeder ausgebildet sein und das Einlasselement zumindest abschnittsweise aufnehmen beziehungsweise sich spiralförmig um dieses erstrecken.

Das Vorsehen einer Vorspannungseinrichtung ist insbesondere für Varianten vorteilhaft, bei denen zunächst eine Sollbruchstelle mittels des Aktorelement durchbrochen werden muss und die Vorspannungseinrichtung anschließend ein ausreichendes Bewegen des Verschlusselementes aus seiner Ausgangsposition gewährleisten soll (beispielsweise ein vollständiges Abheben von einem axialen Ende des Einlasselementes). Hierfür kann die Vorspannungseinrichtung ferner dazu ausgebildet sein, dass Verschlusselement auch derart weit zu bewegen, dass dieses von dem sich gegebenenfalls verlängernden Aktorelement abgehoben wird. Um einen definierten Öffnungs- beziehungsweise Strömungsquerschnitt durch das Ventil zu bilden, kann hierbei ferner vorgesehen sein, dass die Vorspannungseinrichtung dazu ausgebildet ist, das Verschlusselement (z. B. in Form des abgetrennten Kerbrohrkopfes) bis zu einem vorbestimmten Anschlag zu verschieben. Der Anschlag kann in einer Gehäuseanordnung, an einer Gehäuseinnenwand des Ventils oder aber an dem Auslasselement bereitgestellt sein und zum Beispiel eine Durchmesserstufe umfassen. Ferner kann das Verschlusselement sich bei einer Verschiebung durch die Vorspannungseinrichtung allgemein an dem Gehäuse und insbesondere an einer Gehäuseinnenwand abstützen oder auch direkt daran abgleiten.

Das Ventil kann ferner eine Gehäuseanordnung umfassen, die das Einlasselement, das Aktorelement und/oder das Verschlusselement zumindest teilweise aufnimmt. Hierzu kann die Gehäuseanordnung im Wesentlichen zylindrisch und vorzugsweise langgestreckt ausgebildet sowie einstückig oder aus mehreren Einzelkomponenten zusammengesetzt sein. Insbesondere kann die Gehäuseanordnung rohrförmig oder hülsenartig ausgebildet sein und einen Kopplungsbereich für das Einlasselement sowie für ein etwaiges von dem Auslassbereich umfasstes Auslasselement aufweisen. Ferner kann die Gehäuseanordnung sich entlang einer Längsachse erstrecken, die parallel zu den Längsachsen des Einlasselements und/oder des Aktorelements verlaufen kann und vorzugsweise mit diesen zusammenfällt.

In einer Variante ist zumindest das Einlasselement mit der Gehäuseanordnung verschweißt. Zusätzlich oder alternativ kann auch ein etwaiges Auslasselement des Auslassbereichs mit der Gehäuseanordnung verschweißt sein. Das Aktorelement wie auch das Verschlusselement können dabei innerhalb der Gehäuseanordnung angeordnet und fluidisch abdichtend von dieser umschlossen sein. Die Schweißverbindungen können ferner eine ausreichende Abdichtung des Ventils gewährleisten und die Einlass- und Auslasselemente und vorzugsweise auch die Gehäuseanordnung können hohlzylindrisch oder im Wesentlichen rohrförmig ausgebildet sein.

Prinzipiell ist es denkbar, dass die Erwärmung des Aktorelements ohne gezielte oder künstlich erzeugte Energiezufuhr erfolgt, sondern sich automatisch aufgrund einer allgemeinen Erwärmung des Satellitenantriebssystems beim Atmosphärenwiedereintritt einstellt. Beispielsweise ist es bekannt, dass aufgrund aerothermodynamischer Effekte beim Atmosphärenwiedereintritt eine erhebliche Reibungswärme erzeugt wird, die einen Satelliten und dessen Komponenten allgemein aufheizt.

Zusätzlich oder alternativ kann aber vorgesehen sein, dass das Ventil ferner eine Heizeinrichtung umfasst, die dazu ausgebildet ist, dass Aktorelement zu erwärmen und vorzugsweise zumindest bis zu dem vorbestimmten Erwärmungsgrad zu erwärmen. Die Heizeinrichtung kann insbesondere elektrisch betreibbar sein und/oder in unmittelbarem Kontakt mit dem Aktorelement stehen, insbesondere in einem Kontakt mit einem etwaigen Formgedächtnismaterial des Aktorelements. Bevorzugt ist die Heizeinrichtung jedoch außerhalb eines fluidleitenden Ventilinnenraums ausgebildet (beispielsweise außerhalb der Gehäuseanordnung) und für ein indirektes Aufwärmen des Aktorelements über zwischengeordnete Elemente ausgebildet.

Gemäß einer Variante liegt die Heizeinrichtung zumindest teilweise an einer Außenumfangsfläche der Gehäuseanordnung an, wobei letztere wiederum in einer wärmeleitenden Verbindung mit dem Aktorelement steht. Hierzu ist die Heizeinrichtung vorzugsweise zylindrisch ausgebildet und erstreckt sich ebenfalls entlang einer Längsachse des Einlasselements und/oder des Aktorelements und/oder der Gehäuseanordnung. Ferner kann vorgesehen sein, dass das Aktorelement an einer Innenumfangsfläche der Gehäuseanordnung anliegt, die vorzugsweise einer mit der Heizeinrichtung in Kontakt stehenden Außenumfangsfläche der Gehäuseanordnung im Wesentlichen gegenüberliegt.

Die Erfindung betrifft ferner ein Satellitenantriebssystem, umfassend ein Ventil nach einem der vorangehenden Aspekte.

Im Folgenden werden bevorzugte Ausführungsformen der Erfindung anhand der beigefügten Zeichnungen näher erläutert, wobei
- Figur 1: eine Querschnittsansicht eines Ventils gemäß einem Ausführungsbeispiel zeigt, das sich in einem nicht geöffneten Ausgangszustand befindet; und
- Figur 2: eine Ansicht analog zu Figur 1 zeigt, wobei sich das Ventil in einem geöffneten Zustand befindet.

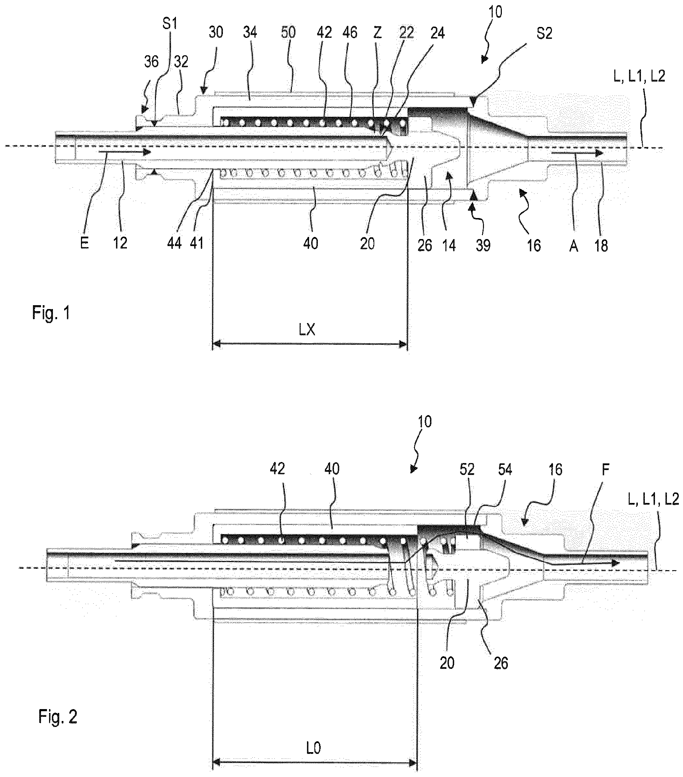

In Figur 1 ist ein Ventil gemäß einem Ausführungsbeispiel gezeigt und allgemein mit 10 bezeichnet. Das Ventil 10 weist eine allgemein zylindrische Gestalt auf und erstreckt sich entlang einer Längsachse L, welche mit den Längsachsen sämtlicher nachfolgender Ventilkomponenten zusammenfällt.

Man erkennt, dass das Ventil 10 zunächst ein rohrförmiges Einlasselement 12 umfasst, das mit einer nicht dargestellten Fluidleitung eines Satellitenantriebssystems koppelbar ist (z.B. mittels WIG-Orbitalschweißen). Das Einlasselement 12 ist dabei mit einem kreisrunden Querschnitt ausgebildet und erstreckt sich entlang einer Längsachse L1, die mit der Ventil-Längsachse L zusammenfällt. Entsprechend ist das Einlasselement 12 auch holzylindrisch ausgebildet und definiert einen Einlassfluidpfad E, der durch das rohrförmige Einlasselement 12 in Richtung eines Innenbereiches 14 des Ventils 10 verläuft.

Ferner weist das Ventil 10 einen Auslassbereich 16 auf, der ein rohrförmiges Auslasselement 18 umfasst. Dieses ist analog zu dem Einlasselement 12 mit einem kreisrunden Querschnitt ausgebildet und erstreckt sich entlang einer Längsachse L2, die mit den weiteren Längsachsen L, L1 zusammenfällt. Entsprechend definiert der Auslassbereich 16 einen Auslassfluidpfad A, der sich ebenfalls entlang der Ventillängsachse L erstreckt und somit koaxial zu dem Einlassfluidpfad E. Wie in Figur 1 gezeigt, verläuft der Auslassfluidpfad A dabei von dem Innenbereich 14 des Ventils 10 in Richtung eines nach außen weisenden axialen Endes des Auslasselements 18. Dieses ist ebenfalls mit einer nicht dargestellten Fluidleitung des Satellitenantriebssystems koppelbar oder ermöglicht ein direktes Ablassen von Fluid (und insbesondere Treibstoff) in die Umgebung.

In Figur 1 erkennt man außerdem, dass eine fluidische Verbindung zwischen dem Einlasselement 12 und im Auslassbereich 16 durch ein Verschlusselement 20 blockiert ist. Genauer gesagt ist das Verschlusselement 20 stoffschlüssig mit einem in den Innenbereich 14 des Ventils 10 hineinragenden axialen Ende Z des Einlasselements 12 verbunden. Dabei sind das Verschlusselement 20 und das axiale Ende Z des Einlasselements 12 über einen Verbindungsabschnitt 22 verbunden, der eine Einkerbung 24 aufweist, die eine Sollbruchstelle bildet.

Das Verschlusselement 20 umfasst ferner einen Krafteinleitungsbereich 26. Dieser weist im Vergleich zu dem Einlasselement 12 vergrößerte Querschnittsabmessungen auf und ist allgemein als vorsprungartiger Bereich ausgebildet ist, der sich quer zu der Ventillängsachse L erstreckt.

Das Verschlusselement 20 sowie der in den Innenbereich 14 des Ventils 10 hineinragen der Abschnitt des Einlasselements 12 sind dabei von einer einstückigen Gehäuseanordnung 30 des Ventils 10 umgeben. Die Gehäuseanordnung 30 ist ebenfalls allgemein hohlzylindrisch ausgebildet und nimmt ferner ein nachfolgend erläutertes Aktorelement 40 sowie eine als Vorspanneinrichtung dienende Spiraldruckfeder 42 auf.

Die Gehäuseanordnung 30 umfasst einen Einlassabschnitt 32 und einen Gehäusehauptabschnitt 34, wobei Letzterer gegenüber dem Einlassabschnitt 32 mit vergrößerten Querschnittsabmessungen ausgebildet ist (insbesondere mit einem vergrößerten Außen- sowie Innendurchmesser). Die Abschnitte 32,34 erstrecken sich jeweils entlang der Ventil-Längsachse L. Der Einlassabschnitt 32 liegt an einer Außenumfangsfläche des Einlasselements 12 an und ist an einem nach Außen weisenden axialen Endbereich 36 mit diesem verschweißt. Hierzu sind das Einlasselement 12 und der Einlassabschnitt 32 mittels einer umlaufenden Schweißnaht S1 verbunden, die allgemein fluidisch abdichtend ausgebildet ist.

Der Hauptgehäuseabschnitt 34 weist an seinem dem Auslassbereich 16 zugewandten Ende eine Stirnfläche 39 auf, die mit einem durchmesservergrößerten Abschnitt des Auslassrohrs 18 verschweißt ist. Hierzu ist ebenfalls eine umlaufende Schweißnaht S2 vorgesehen, die eine fluidisch abdichtende Verbindung bereitstellt.

Im Ergebnis zeichnet sich das Ventil 10 gemäß diesem Ausführungsbeispiel somit dadurch aus, dass durch lediglich zwei Schweißnähte S1, S2 sowie eine begrenzte Anzahl von Komponenten (hier: Einlasselement 12, einstückige hülsenförmige Gehäuseanordnung 30 und Auslasselement 18) ein fluidisch abgedichtetes Ventil 10 bereitgestellt wird, dass in seinem Innenbereich 14 das Verschlusselement 20 sowie die nachfolgend erläuterten weiteren Komponenten aufnimmt. Ferner erstrecken sich sämtliche der genannten Komponenten entlang einer gemeinsamen Längsachse, sodass das Ventilelement 10 eine einfache Struktur sowie eine geringe Baugröße und eine allgemein einfache zylindrische Form aufweist.

Wie erwähnt, ist das Ventil 10 dabei allgemein zwischen nicht dargestellten Fluidleitungsabschnitten eines Satellitenantriebssystems anordenbar und über das Einlasselement 12 und das Auslasselement 18 mit diesen koppelbar. Somit kann es zunächst eine entsprechende Fluidleitung des Satellitenantriebssystems blockieren und diese in der nachfolgend erläuterten Weise einmalig öffnen.

In Figur 1 erkennt man ferner, dass in dem Innenbereich 14 des Ventils 10 ein hülsenförmiges Aktorelement 40 vorgesehen ist. Dieses liegt an einer Innenumfangsfläche des Hauptgehäuseabschnittes 34 an und stützt sich ferner an einer inneren Stirnwand 41 im Übergangsbereich des Hauptgehäuseabschnittes 34 und des Einlassabschnittes 32 ab beziehungsweise liegt daran unmittelbar an. Das Aktorelement 40 umfasst ferner eine Eingangsbohrung 44, durch die sich das Einlasselement 12 in den Innenbereich 14 des Ventils 10 hinein erstreckt. An seinem von der Eingangsbohrung 44 abgewandten axialen Ende ist das Aktorelement 40 mit einem gegenüber der Eingangsbohrung 44 größeren Innendurchmesser ausgebildet und liegt an dem Krafteinleitungsbereich 26 des Verschlusselements 20 an.

Somit erstreckt sich das Aktorelement 40 innerhalb des Hauptgehäuseabschnitts 34 entlang des Einlasselements 12 bis zu dem Verschlusselement 20, wobei es jedoch abgesehen von dem Bereich der Eingangsbohrung 44 in einem radialen Abstand von dem Einlasselement 12 angeordnet ist. Hierdurch wird ein Zwischenraum 46 zwischen einer Außenumfangsfläche des Einlasselements 12 und einer Innenumfangsfläche des Aktorelements 40 gebildet, der eine allgemein zylindrische Form mit einem ringförmigen Querschnitt aufweist.

In diesem Zwischenraum 46 ist eine Spiraldruckfeder 42 angeordnet und in dem in Figur 1 gezeigten Ausgangszustand des Ventils 10 komprimiert. Dabei erstreckt sich die Spiraldruckfeder 42 ebenfalls entlang der Längsachse L des Ventils 10 und nimmt dabei das Einlasselement 12 auf beziehungsweise erstreckt sich spiralförmig entlang sowie um das Einlasselement 12. Ferner liegt es mit einem axialen ersten Ende an dem Aktorelement 40 im Bereich von dessen Eingangsbohrung 44 an und mit einem axialen zweiten Ende an dem Krafteinleitungsbereich 26 des Verschlusselements 20. Aufgrund des in Figur 1 komprimierten Zustandes übt die Spiraldruckfeder 42 dabei eine axiale Druckkraft auf das Verschlusselement 20 aus, die in Richtung des Auslassbereichs 46 entlang der Längsachse L wirkt.

Schließlich umfasst das Ventil 10 eine elektrische Heizeinrichtung 50, die hohlzylindrisch und insbesondere rohrförmig ausgebildet ist. Die Heizeinrichtung 50 erstreckt sich ebenfalls entlang der Ventil-Längsachse L und liegt dabei mit einer Innenumfangsfläche an einer Außenumfangsfläche des Hauptgehäuseabschnittes 34 an. Konkret überschneidet sich ein Gehäusebereich, an dem sowohl das Aktorelement 40 wie auch die Heizeinrichtung 50 anliegen. Mit anderen Worten liegt das Aktorelement 40 an einem Bereich der Innenumfangsfläche des Hauptgehäuseabschnittes 34 an, der einem Bereich der Außenumfangsfläche gegenüberliegt, an dem die Heizeinrichtung 50 angeordnet ist. Somit kann eine Wärmeübertragung von der Heizeinrichtung 50 an das Aktorelement 40 über den Hauptgehäuseabschnitt 34 erfolgen.

Im gezeigten Fall ist das Aktorelement 40 ferner aus einem Formgedächtnismaterial ausgebildet und in einem pseudoplastisch deformierten Zustand in der Ventilanordnung 10 eingesetzt. Konkret wurde die Länge LX des Aktorelements 40 im Rahmen einer pseudoplastischen Kompression reduziert, wobei das gestauchte Aktorelement 40 diese reduzierte Länge LX unter ausbleibender Erwärmung durch die Heizeinrichtung 50 zunächst beibehält.

Wird die Heizeinrichtung 50 jedoch aktiviert und das Aktorelement 40 solange erwärmt, bis dessen Temperatur oder Erwärmungsgrad einen vorbestimmten Schwellenwert erreicht, kehrt das Aktorelement 40 in bekannter Weise zu seiner Ursprungs-Ursprungsform zurück. Genauer gesagt expandiert das Aktorelement 40 sprunghaft zu seiner ursprünglichen Länge L0, wobei sich insbesondere ein dem Auslassbereich 16 zugewandtes axiales Ende des Aktorelement 40 relativ zu dem feststehenden Einlasselement 12 entlang der Ventil-Längsachse L verschiebt.

Dieser Zustand ist in Figur 2 gezeigt. Man erkennt, dass sich nach dem Erreichen des vorbestimmten Erwärmungsgrades das Aktorelement 40 mit der gegenüber der reduzierten Länge LX vergrößerten Ausgangslänge L0 entlang der Ventil-Längsachse L erstreckt. Dabei ist aus Darstellungsgründen die Ausgangslänge L0 nur geringfügig gegenüber der reduzierten Länge LX vergrößert abgebildet.

Da das Verschlusselement 20 über den Verbindungsabschnitt 24 stoffschlüssig mit dem allgemein feststehenden Einlasselement 12 gekoppelt ist, behindert dieses zunächst die Verlängerung des Aktorelement 40. Entsprechend stützt sich das Aktorelement 40 mit zunehmenden Abstützkräften an dem Krafteinleitungsbereiche 26 des Verschlusselements 20 ab, wobei diese Kräfte Druckkräften entsprechen, die entlang der Ventil-Längsachse L in Richtung des Auslassbereiches 16 wirken. Überschreiten diese Abstützkräfte eine Bruchgrenze der Sollbruchstelle 24, wird der Verbindungsabschnitt 24 durchtrennt und das Verschlusselement 30 wird von dem Einlasselement 12 und dem Aktorelement 40 abgehoben und in Richtung des Auslassbereiches 16 entlang der Längsachse L verschoben. Diese Bewegung wird ferner durch die Vorspannkraft der Spiraldruckfeder 42 unterstützt, die infolge des Durchtrennens der Sollbruchstelle 24 entlang der Längsachse L in Richtung des Auslassbereiches 16 expandiert. Im Ergebnis ist eine fluidische Blockierung zwischen dem Einlasselement 12 und dem Auslassbereich 16 somit aufgehoben, da das gemäß Figur 2 aus einer Ausgangsposition bewegte Verschlusselement 20 fluidisch umströmt werden kann, wie durch den Fluidpfad F angedeutet.

Hierzu umfasst das Verschlusselement 20 ferner einen Durchlassbereich 52, der an einem dem Krafteinleitungsbereich 26 gegenüberliegenden Umfangsbereich des Verschlusselementes 20 ausgebildet ist und eine geringere radiale Erstreckung als der Krafteinleitungsbereich 26 aufweist. Im Detail verdeutlicht sich aus Figur 2, dass der Krafteinleitungsbereich 26 an einer Innenumfangsfläche des Gehäusehauptabschnitts 34 anliegt und nach einem Durchtrennen der Sollbruchstelle 24 entlang dieser verschoben wird. Mit anderen Worten bildet der entsprechende Innenumfangsflächenbereich des Gehäusehauptabschnitts 34 eine Führungsfläche für das Bewegen des Verschlusselementes 20 aus dessen Ausgangsposition. Die Verschiebung erfolgt dabei bis zu einem Anschlag des Verschlusselements 20 an dem Auslasselement 18, sodass sich ein vorbestimmter Öffnungs- beziehungsweise Strömungsquerschnitt durch das Ventil 10 einstellt. Der Durchlassbereich 52 weist im Vergleich zu dem Krafteinleitungsbereich 26 hingegen eine geringere radiale Erstreckung auf und ist in einem Abstand zu der Innenumfangsfläche des Hauptgehäuseabschnitts 34 angeordnet. Der hierdurch gebildete Zwischenraum 54 fungiert als Fluidpassage und ermöglicht das Umströmen des Verschlusselements 20 gemäß dem Fluidpfad F.

Abschließend sei darauf hingewiesen, dass sämtliche erläuterte Elemente des Ventils 10 mit Ausnahme des Verschlusselements 20 symmetrisch zu der Ventil-Längsachse L ausgebildet sind und insbesondere rotationssymmetrisch hierzu. Ferner lässt sich in dem gezeigten Fall eine kompakte Struktur insbesondere dadurch Erreichen, dass sich zumindest das Einlasselement 12, die Gehäuseanordnung 30, das Auslasselement 18 sowie das Aktorelement 40 entlang einer gemeinsamen Längsachse erstrecken. Schließlich sind in Figur 2 die Schweißnähte S1 und S2 nicht gesondert dargestellt, insbesondere um den Kopplungsbereich zwischen der Gehäuseanordnung 30 und dem Auslasselement 18 besser darstellen zu können.

## Patentansprüche

1. Ventil (10) zum selektiven Öffnen einer Fluidleitung, insbesondere in einem Satellitenantriebssystem, umfassend:
- ein Einlasselement (12),
- einen Auslassbereich (16),
- ein Verschlusselement (20), das in einer Ausgangsposition eine fluidische Verbindung zwischen dem Einlasselement (12) und dem Auslassbereich (16) blockiert, und
- ein Aktorelement (40), das dazu ausgebildet, sich an dem Verschlusselement (20) abzustützen,
wobei das Aktorelement (40) ein zumindest von dem Einlasselement (12) abweichendes Wärmeausdehnungsverhalten aufweist, und
wobei sich das Aktorelement (40) entlang einer Längsachse (L1) des Einlasselements (12) erstreckt und dazu ausgebildet ist, sich ab Erreichen eines vorbestimmten Erwämungsgrades mit einer derartigen Kraft an dem Verschlusselement (20) abzustützen, dass das Verschlusselement (20) aus seiner Ausgangsposition bewegt wird und eine fluidische Verbindung zwischen dem Einlasselement (12) und dem Auslassbereich (16) ermöglicht, **dadurch gekennzeichnet, dass**
das Ventil (10) ferner eine Vorspannungseinrichtung (42) umfasst, die sich entlang der Längsachse (L1) des Einlasselements (12) erstreckt, in einem Zwischenraum zwischen dem Aktorelement (40) und dem Einlasselement (12) angeordnet ist und sich an dem Verschlusselement (20) abstützt, und die dazu ausgebildet ist, das Verschlusselement (20) spätestens ab Erreichen des vorbestimmten Erwärmungsgrades aus dessen Ausgangsposition zu drängen.

2. Ventil (10) nach Anspruch 1,
wobei das Einlasselement (12) rohrförmig ausgebildet ist.

3. Ventil (10) nach einem der vorangehenden Ansprüche,
wobei das Aktorelement (40) einen hohlzylindrischen Abschnitt umfasst, der das Einlasselement (12) zumindest abschnittsweise umgibt.

4. Ventil (10) nach einem der vorangehenden Ansprüche,
wobei das Aktorelement (40) spätestens ab Erreichen des vorbestimmten Erwämungsgrades zumindest abschnittsweise relativ zu dem Einlasselement (12) verschieblich ist und insbesondere entlang der Längsachse (L1) des Einlasselements (12) verschieblich ist.

5. Ventil (10) nach einem der vorangehenden Ansprüche,
wobei das Aktorelement (40) spätestens ab Erreichen des vorbestimmten Erwärmungsgrades wenigstens eine Abmessung (L0) aufweist, die gegenüber einem Zustand des Aktorelements (40) unterhalb des vorbestimmten Erwärmungsgrades vergrößert ist.

6. Ventil (10) nach einem der vorangehenden Ansprüche,
wobei das Aktorelement (40) ein Formgedächtnismaterial umfasst.

7. Ventil (10) nach einem der vorangehenden Ansprüche,
wobei das Verschlusselement (20) in seiner Ausgangsposition an einem axialen Ende (Z) des Einlasselements (12) angeordnet ist.

8. Ventil (10) nach einem der vorangehenden Ansprüche,
wobei dass das Verschlusselement (20) in seiner Ausgangsposition stoffschlüssig mit dem Einlasselement (12) verbunden ist.

9. Ventil (10) nach Anspruch 8,
wobei ein Verbindungsabschnitt (22) zwischen dem Einlasselement (12) und dem Verschlusselement (20) einen mechanisch geschwächten Bereich umfasst, der eine Sollbruchstelle (24) bildet.

10. Ventil (10) nach einem der vorangehenden Ansprüche,
wobei dass das Verschlusselement (20) wenigstens einen Krafteinleitungsbereich (26) umfasst, an dem sich das Aktorelement (40) spätestens ab Erreichen des vorbestimmten Erwärmungsgrades abstützen kann.

11. Ventil (10) nach einem der vorangehenden Ansprüche,
ferner umfassend eine Gehäuseanordnung (30), die das Einlasselement (12), das Aktorelement (40) und/oder das Verschlusselement (20) zumindest teilweise aufnimmt.

12. Ventil (10) nach einem der vorangehenden Ansprüche,
wobei die Gehäuseanordnung (30) mit dem Einlasselement (12) und/oder einem Auslasselement (18) des Auslassbereiches (16) verschweißt ist.

13. Ventil (10) nach einem der vorangehenden Ansprüche,
ferner umfassend eine Heizeinrichtung (50), die dazu ausgebildet ist, dass Aktorelement (40) zu erwärmen.

14. Satellitenantriebssystem,
umfassend ein Ventil (10) nach einem der vorangehenden Ansprüche.

## Claims

1. Valve (10) for selectively opening a fluid line, in particular for a satellite propulsion system, comprising:
- an inlet element (12),
- an outlet area (16),
- a closure element (20) which in an initial position blocks a fluidic connection between the inlet element (12) and the outlet region (16), and
- an actuator element (40) which is adapted to be supported on the closure element (20),
wherein the actuator element (40) has a thermal expansion behavior which differs from at least the inlet element (12), and
wherein the actuator element (20) extends along a longitudinal axis (L1) of the inlet element (12) and, upon reaching a predetermined degree of heating, is adapted to be supported on the closure element (20) with such a force, that the closure element (20) is moved out of its initial position and allows a fluidic connection between the inlet element (12) and the outlet area (16), **characterized in that**
the valve (10) further comprises a biasing device (42) which extends along the longitudinal axis (L1) of the inlet element (12), which is arranged in an interspace between the actuator element (40) and the inlet element (12) and is supported on the closure element (20), and which is adapted to bias the closure element (20) out of its initial position at the latest upon reaching the predetermined degree of heating.

2. Valve (10) according to claim 1,
wherein the inlet element (12) is tube shaped.

3. Valve (10) according to one of the preceding claims,
wherein the actuator element (40) comprises a hollow cylindrical portion which surrounds the inlet element (12) at least partially.

4. Valve (10) according to one of the preceding claims,
wherein the actuator element (40), at the latest upon reaching the predetermined degree of heating, at least in sections is displaceable relative to the inlet element (12) and in particular is displaceable along the longitudinal axis (L1) of the inlet element (12).

5. Valve (10) according to one of the preceding claims,
wherein the actuator element (40), at the latest upon reaching the predetermined degree of heating, has at least one dimension (L0) which is enlarged relative to the state of the actuator element (40) below the predetermined degree of heating.

6. Valve (10) according to one of the preceding claims,
wherein the activator element (40) comprises shape-memory material.

7. Valve (10) according to one of the preceding claims,
wherein the closure element (20) in its initial position is arranged at an axial end (Z) of the inlet element (12).

8. Valve (10) according to any one of the preceding claims,
wherein the closure element (20) in its initial position is connected to the inlet element (12) by a bonded connection.

9. Valve (10) according to claim 8,
wherein a connection portion (22) between the inlet element (12) and the closure element (20) comprises a mechanically weakened region which forms a predetermined breaking point (24).

10. Valve (10) according to any one of the preceding claims,
wherein the closure element (20) comprises at least one force introduction area (26) on which the actuator element (20) can be supported at least upon reaching the predetermined degree of heating.

11. Valve (10) according to any one of the preceding claims,
further comprising a housing assembly (30) which accommodates the inlet element (12), the actuator element (40) and/or the closure element (20) at least partially.

12. Valve (10) according to any one of the preceding claims,
wherein the housing assembly (30) is welded to the inlet element (12) and/or an outlet element (18) of the outlet area (16).

13. Valve (10) according to any one of the preceding claims,
further comprising a heating device (50) which is adapted to heat the actuator element (40).

14. Satellite propulsion system comprising a valve (10) according to any one of the preceding claims.

## Revendications

1. Soupape (10) destinée à ouvrir sélectivement un conduit de fluide, en particulier dans un système de propulsion de satellite, la soupape comprenant :
- un élément d'entrée (12),
- une zone de sortie (16),
- un élément de fermeture (20) qui bloque, dans une position de départ, une liaison fluidique entre l'élément d'entrée (12) et la zone de sortie (16), et
- un élément d'actionnement (40) conçu pour s'appuyer sur l'élément de fermeture (20),
l'élément d'actionnement (40) ayant un comportement de dilatation thermique s'écartant au moins de l'élément d'entrée (12), et
l'élément d'actionnement (40) s'étendant le long d'un axe longitudinal (L1) de l'élément d'entrée (12) et étant conçu pour s'appuyer, lorsqu'il atteint un degré d'échauffement prédéterminé, sur l'élément de fermeture (20) avec une force telle que l'élément de fermeture (20) quitte sa position de départ et permet une liaison fluidique entre l'élément d'entrée (12) et la zone de sortie (16), **caractérisée en ce que**
la soupape (10) comprend en outre un moyen de précontrainte (42) qui s'étend le long du axe longitudinal (L1) de l'élément d'entrée (12), qui est disposé dans un espace intermédiaire entre l'élément d'actionnement (40) et l'élément d'entrée (12) et s'appuie sur l'élément de fermeture (20) et qui est conçu pour pousser l'élément de fermeture (20) depuis sa position initiale au plus tard lorsque le degré d'échauffement prédéterminé est atteint.

2. Soupape (10) selon la revendication 1,
l'élément d'entrée (12) étant de forme tubulaire.

3. Soupape (10) selon l'une des revendications précédentes,
l'élément d'actionnement (40) comprenant une partie cylindrique creuse qui entoure l'élément d'entrée (12) au moins par endroits.

4. Soupape (10) selon l'une des revendications précédentes,
l'élément d'actionnement (40) pouvant coulisser au moins par endroits par rapport à l'élément d'entrée (12) lorsque le degré d'échauffement prédéterminé est atteint et en particulier pouvant coulisser le long de l'axe longitudinal (L1) de l'éléments d'entrée (12).

5. Soupape (10) selon l'une des revendications précédentes,
l'élément d'actionneur (40) ayant, au plus tard lorsque le degré d'échauffement prédéterminé est atteint, au moins une dimension (L0) qui est augmenté au-dessous du degré d'échauffement prédéterminé par rapport à un état de l'élément d'actionnement (40).

6. Soupape (10) selon l'une des revendications précédentes, l'élément d'actionnement (40) comprenant un matériau à mémoire de forme.

7. Soupape (10) selon l'une des revendications précédentes,
l'élément de fermeture (20) étant disposé dans sa position initiale à une extrémité axiale (Z) de l'élément d'entrée (12).

8. Soupape (10) selon l'une des revendications précédentes,
l'élément de fermeture (20) étant relié, dans sa position initiale, par une liaison de matière à l'élément d'entrée (12).

9. Soupape (10) selon la revendication 8,
une partie de liaison (22) entre l'élément d'entrée (12) et l'élément de fermeture (20) comprenant une zone de faible résistance mécanique qui forme un point de rupture (24).

10. Soupape (10) selon l'une des revendications précédentes,
l'élément de fermeture (20) comprenant au moins une zone d'introduction de force (26) sur laquelle l'élément d'actionnement (40) peut s'appuyer au plus tard lorsque le degré d'échauffement prédéterminé est atteint.

11. Soupape (10) selon l'une des revendications précédentes,
comprenant en outre un ensemble formant boîtier (30) qui loge au moins partiellement l'élément d'entrée (12), l'élément d'actionnement (40) et/ou l'élément de fermeture (20).

12. Soupape (10) selon l'une des revendications précédentes,
l'ensemble formant boîtier (30) étant soudé à l'élément d'entrée (12) et/ou à un élément de sortie (18) de la zone de sortie (16).

13. Soupape (10) selon l'une des revendications précédentes,
comprenant en outre un dispositif de chauffage (50) conçu pour chauffer l'élément d'actionnement (40).

14. Système de propulsion de satellite,
comprenant une soupape (10) selon l'une des revendications précédentes.
